# EUROPEAN PATENT SPECIFICATION

(11) **EP 3 004 604 B1**
(45) Date of publication and mention of the grant of the patent: **12.03.2025**
(21) Application number: 14733308.2
(22) Date of filing: 05.06.2014
(51) Int. Cl.: F02D 35/02, F02D 41/14, G01M 15/11

(54) **MISFIRE DETECTION SYSTEM FOR INTERNAL COMBUSTION ENGINE**
FEHLZÜNDUNGSDETEKTOR FÜR EINEN VERBRENNUNGSMOTOR
SYSTÈME DE DÉTECTION DE RATÉ D'ALLUMAGE POUR MOTEUR À COMBUSTION INTERNE

(30) Priority: 05.06.2013 JP 2013119121
(43) Date of publication of application: 13.04.2016
(73) Proprietor: TOYOTA JIDOSHA KABUSHIKI KAISHA, Toyota-shi, Aichi-ken, 471-8571 (JP)
(72) Inventor: AOYAMA, Yukitoshi, Toyota-shi Aichi-ken 471-8571 (JP); HASEGAWA, Ryo, Toyota-shi Aichi-ken 471-8571 (JP); YAMADA, Tomomi, Toyota-shi Aichi-ken 471-8571 (JP); MURASE, Junichi, Toyota-shi Aichi-ken 471-8571 (JP); MIYOSHI, Yuji, Toyota-shi Aichi-ken 471-8571 (JP)
(74) Representative: Cabinet Beau de Loménie
(86) International application number: PCT/IB2014/000971
(87) International publication number: WO 2014/195791

(56) References cited:
- WO-A1-99/44028
- US-A- 5 263 364
- US-A- 5 747 681
- US-A1- 2009 282 903
- US-A1- 2012 271 536

## Description

### BACKGROUND OF THE INVENTION

### 1. Field of the Invention

The invention relates to a misfire detection system used in an internal combustion engine.

### 2. Description of Related Art

When a misfire occurs in a cylinder during an operation of an internal combustion engine installed in a vehicle, a running performance and a fuel efficiency may deteriorate. Moreover, an increase in emissions and erosion of an exhaust gas purification catalyst may occur due to an increase in an amount of unburned fuel components in exhaust gas accompanying the misfire. Therefore, when a misfire occurs in a cylinder of an internal combustion engine, the occurrence of the misfire is preferably detected quickly and accurately. As a technique for detecting a misfire in a cylinder of an internal combustion engine, Japanese Patent Application Publication No. 2003-322053 (JP 2003-322053 A) discloses a technique of detecting a misfire on the basis of a rotation angle signal from a crankshaft. In this technique, variation in the rotation angle of the crankshaft during travel by the vehicle on a bad road is taken into consideration so that when a specific operating condition affecting a misfire determination, such as travel on a bad road, is detected, the misfire determination is prohibited. As a result, an erroneous misfire determination is avoided.

Japanese Patent Application Publication No. 2012-31766 (JP 2012-31766 A) discloses a technique of detecting a misfire using a detection value from an in-cylinder pressure sensor capable of detecting a course of an in-cylinder pressure instead of the method described above, in which a misfire is detected on the basis of the rotation angle signal from the crankshaft. In this technique, misfire detection is performed on the basis of variation over a plurality of cycles in an in-cylinder pressure detection value at a predetermined crank angle within a combustion period after compression top dead center (TDC), and therefore the misfire detection is unlikely to be affected by individual detection differences among in-cylinder pressure sensors.

When a misfire is detected in an internal combustion engine on the basis of the rotation angle signal from the crankshaft, an index (referred to hereafter as a "misfire index") relating to a combustion condition in the internal combustion engine, including a misfire condition, may be derived on the basis of the rotation angle signal, and misfire detection may be performed on the basis of the misfire index. Hence, the misfire index serves as a reference for detecting a misfire in the internal combustion engine, and therefore a correlation (referred to hereafter as a "misfire correlation") between the combustion condition in the internal combustion engine and a value of the misfire index is preferably defined such that a linear relationship is formed between the combustion condition and the misfire index. It has been found, however, that in actuality, the misfire correlation tends to vary in accordance with combustion-related environmental conditions in the cylinder of the internal combustion engine. When the misfire correlation varies in this manner, the precision of misfire detection based on the misfire index may decrease, which is undesirable from the viewpoint of realizing accurate misfire detection.

Further, when an attempt is made to perform various types of control (for example, exhaust gas recirculation (EGR) gas amount control, and fuel injection timing and injection amount control) relating to combustion in the internal combustion engine on the basis of the misfire condition in the internal combustion engine, or in other words a degree to which actual combustion in the internal combustion engine deviates from a correct combustion condition, in a case where the precision of the misfire detection is low, it may be difficult to realize accurate control.

US 2012/271536 relates to a method and device for recognizing uncontrolled combustion in an internal combustion engine. US 5 263 364 relates to an apparatus for detecting misfire in multicylinder internal combustion engines. US 5 747 681 relates to a combustion state-detecting system for internal combustion engines.

### SUMMARY OF THE INVENTION

The invention provides a misfire detection system for an internal combustion engine, with which a misfire in the internal combustion engine can be detected with a comparatively high degree of precision on the basis of a rotation angle signal from a crankshaft.

The invention focuses on a parameter relating to a compression end pressure in a cylinder of the internal combustion engine. The compression end pressure of the internal combustion engine is an element that determines a reaction force applied to rotation of the crankshaft at compression TDC, and an amount of variation in a rotation angular velocity of the crankshaft tends to be determined by this reaction force. The amount of variation in the rotation angular velocity is an element that contributes to the aforesaid misfire index, and therefore the precision of the misfire detection is greatly affected thereby. Hence, by correcting the misfire detection using a parameter relating to the compression end pressure in the cylinder of the internal combustion engine, the detection precision of the misfire detection can be improved.

The invention is defined by claim 1 and relates to a misfire detection system for an internal combustion engine including: a crank angle sensor that detects a rotation angle position of a crankshaft of the internal combustion engine; a misfire detection unit that detects a misfire condition in the internal combustion engine on the basis of a misfire index, which is an index derived using a rotation speed of the crankshaft as a reference so as to correspond to a predetermined order of engine speed of an output signal from the crank angle sensor, and which has a correlation with an amount of variation in an angular velocity of the crankshaft such that a value thereof varies in accordance with the amount of variation in the angular velocity of the crankshaft; an acquisition unit that obtains a parameter relating to a compression end pressure in a cylinder of the internal combustion engine; and a correction unit that corrects the misfire index, or a predetermined misfire detection parameter used together with the misfire index during misfire detection by the misfire detection unit, on the basis of the parameter obtained by the acquisition unit.

In the misfire detection system described above, a misfire in the internal combustion engine is detected by the misfire detection unit using the misfire index derived on the basis of the output signal (referred to hereafter as a "crank angle signal") relating to the rotation angle position of the crankshaft, which is detected by the crank angle sensor. In this misfire detection system, there are no particular limitations on a number of cylinders provided in the internal combustion engine, and the internal combustion engine may be either a spark ignition type internal combustion engine (a gasoline engine) or a compression self-ignition type internal combustion engine (a diesel engine).

The misfire index is derived from the crank angle signal using the rotation speed of the crankshaft as a reference. More specifically, the misfire index is derived by converting the crank angle signal, which is a time domain signal, into a rotation speed domain of the crankshaft, which is a frequency domain, and extracting a specific frequency component, or in other words the aforesaid predetermined order of engine speed. When, in a four-stroke engine, a misfire occurs in one of the cylinders provided in the internal combustion engine, variation appears in one crank angle signal for every two revolutions of the crankshaft. Therefore, the predetermined order of engine speed is preferably a 0.5 order of engine speed. As long as the crank angle signal is affected by a misfire in the internal combustion engine, however, the predetermined order of engine speed is not limited to the 0.5 order, and a preferred order of engine speed may be used as the predetermined order of engine speed.

The misfire index correlates with the angular velocity of the crankshaft such that a value of the index varies in accordance with variation in the angular velocity. For example, the misfire index correlates with an amount of variation in the angular velocity of the crankshaft such that the value of the index increases as variation in the angular velocity of the crankshaft increases. In other words, variation in the value of the misfire index is dependent on the amount of variation in the angular velocity of the crankshaft. Even when an amount of variation in a torque of the internal combustion engine output via the crankshaft remains constant, for example, the derived value of the misfire index increases as the amount of variation in the angular velocity of the crankshaft increases. As regards this correlation between the misfire index and the amount of variation in the angular velocity, the misfire index does not necessarily have to be derived in accordance with a predetermined relationship clearly defining the correlation as long as the correlation whereby the value of the index varies according to the amount of variation in the angular velocity of the crankshaft can be learned as a characteristic of the value of the resulting misfire index.

In the misfire detection system described above, the parameter relating to the compression end pressure in the cylinder is obtained by the acquisition unit, and the correction unit performs a correction relating to misfire detection by the misfire detection unit on the basis of the parameter. Hence, this misfire detection system focuses on the compression end pressure in the cylinder for the purpose of misfire detection. The reason for this, as described above, is that variation in the misfire correlation, which is the correlation between the combustion condition in the internal combustion engine and the value of the misfire index, tends to vary in accordance with the actual environmental conditions relating to combustion in the cylinder of the internal combustion engine. The compression end pressure is an element that determines a reaction force applied to rotation of the crankshaft at compression TDC in the cylinder, and the angular velocity of the crankshaft is affected when this reaction force is applied to the crankshaft. Hence, the misfire index correlating with the amount of variation in the angular velocity of the crankshaft may be considered to be dependent on the compression end pressure.

By performing a correction in relation to the misfire detection performed by the misfire detection unit on the basis of the parameter relating to the compression end pressure, the misfire detection can be performed while suppressing or canceling effects of the actual environmental conditions relating to combustion in the cylinder of the internal combustion engine. As a result, the detection precision of the misfire detection can be improved. More specifically, in the correction performed by the correction unit, the misfire index itself may be corrected on the basis of the parameter. Alternatively, a predetermined misfire detection parameter used together with the misfire index, or in other words a parameter considered to have a correlation with the misfire index rather than a parameter used independently of the misfire index during the misfire detection, may be corrected in the correction performed by the correction unit. The predetermined misfire detection parameter and the misfire index correlate so as to form a relationship according to which a result of the misfire detection may vary when a value of the predetermined misfire detection parameter is modified.

The parameter may be an element related to the compression end pressure or the compression end pressure itself. Alternatively, the parameter may be an element that can be converted into the compression end pressure in consideration of a relationship thereof with the compression end pressure.

In the misfire detection system described above, the internal combustion engine may include a turbocharger, and the parameter may be a turbocharged pressure generated by the turbocharger or the compression end pressure in the cylinder of the internal combustion engine, which is estimated on the basis of the turbocharged pressure. The turbocharged pressure may be considered as a pressure of intake air that flows into the cylinder during an intake stroke, and reaches the compression end pressure during a subsequent compression stroke in the cylinder. This flow corresponds to the aforesaid relationship from which the turbocharged pressure can be converted into the compression end pressure.

In consideration of this relationship, the correction performed by the correction unit may be implemented using the compression end pressure estimated on the basis of the turbocharged pressure.

In the misfire detection system described above, the parameter may be the compression end pressure estimated on the basis of the turbocharged pressure under an assumption that no fuel is burned in the cylinder of the internal combustion engine at compression TDC. Depending on a combustion method employed in the internal combustion engine, a small amount of fuel may be burned before compression TDC is reached by injecting fuel in the intake stroke or the compression stroke, as in a pilot injection performed in a compression self-ignition type internal combustion engine. However, an increase in the compression end pressure achieved by employing this combustion method is smaller than a pressure increase generated by compression itself. Therefore, even when the compression end pressure is estimated under the assumption that no fuel is burned at compression TDC, as described above, an ultimate effect on the precision of the misfire detection is negligible. By simplifying estimation of the compression end pressure in this manner, an amount of labor required to detect a misfire can be reduced.
.

In the misfire detection system described above, the predetermined misfire detection parameter is a predetermined threshold relating to the misfire index, which is used by the misfire detection unit to determine whether or not a misfire has occurred, and the misfire detection unit is configured to detect a misfire when the misfire index is larger than the predetermined threshold. The correction unit corrects the misfire index such that when a value of the parameter obtained by the acquisition unit is converted into the compression end pressure in the cylinder of the internal combustion engine, a correction amount applied to the misfire index or the predetermined threshold increases as a resulting converted value increases. By correcting the misfire index in this manner, a misfire index or a predetermined misfire detection parameter corresponding to an actual phenomenon occurring in the internal combustion engine whereby the reduction in the crank angle velocity increases as the compression end pressure increases can be obtained even when misfire detection is performed by the misfire detection unit in the manner described above. As a result, the precision of the misfire detection can be improved.

According to the invention, a misfire can be detected in an internal combustion engine on the basis of a rotation angle signal from a crankshaft with a comparatively high degree of precision.

### BRIEF DESCRIPTION OF THE DRAWINGS

Features, advantages, and technical and industrial significance of exemplary embodiments of the invention will be described below with reference to the accompanying drawings, in which like numerals denote like elements, and wherein:
FIG. 1 is a schematic view showing a configuration of a misfire detection system for an internal combustion engine according to a first embodiment of the invention;
FIG. 2 is a view showing the misfire detection system of FIG. 1 in the form a function block diagram;
FIG. 3A is a view showing an angular velocity of a crankshaft, respectively when combustion in the internal combustion engine according to this embodiment is normal and when a misfire has occurred;
FIG. 3B is a view showing a power spectrum of a detection signal from a crank angle sensor respectively when combustion in the internal combustion engine according to this embodiment is normal and when a misfire has occurred;
FIG. 3C is a view showing a power spectrum of a 0.5 order of engine speed corresponding to a misfire, which is extracted by implementing filter processing respectively when combustion in the internal combustion engine according to this embodiment is normal and when a misfire has occurred;
FIG. 4 is a view showing a filter characteristic of a digital filter used to extract the 0.5 order corresponding to a misfire in FIG. 3;
FIG. 5 is a view showing variation in a correlation between torque variation in the internal combustion engine and a misfire index in accordance with a compression end pressure in a cylinder;
FIG. 6 is a view showing a course of the angular velocity of the crankshaft and a course of an in-cylinder pressure in the internal combustion engine according to this embodiment;
FIG. 7 is a view showing a control map used to calculate a correction coefficient that can be used to correct a misfire detection performed by the misfire detection system for an internal combustion engine according to this embodiment;
FIG. 8 is a view showing the correlation between the torque variation in the internal combustion engine 1 and the misfire index after being corrected by the misfire detection system for an internal combustion engine according to this embodiment;
FIG. 9 is a view showing a pressure point that can be used to correct the misfire detection performed by the misfire detection system for an internal combustion engine according to this embodiment;
FIG. 10 is a first flowchart showing misfire detection control executed by the misfire detection system for an internal combustion engine according to this embodiment; and
FIG.11 is a second flowchart showing misfire detection control executed by a misfire detection system for an internal combustion engine according to a second embodiment.

### DETAILED DESCRIPTION OF EMBODIMENTS

Specific embodiments of the invention will be described below on the basis of the drawings. The technical scope of the invention is defined by the claims and is not limited to dimensions, materials, shapes, relative arrangements, and so on of constituent components described in the embodiments.

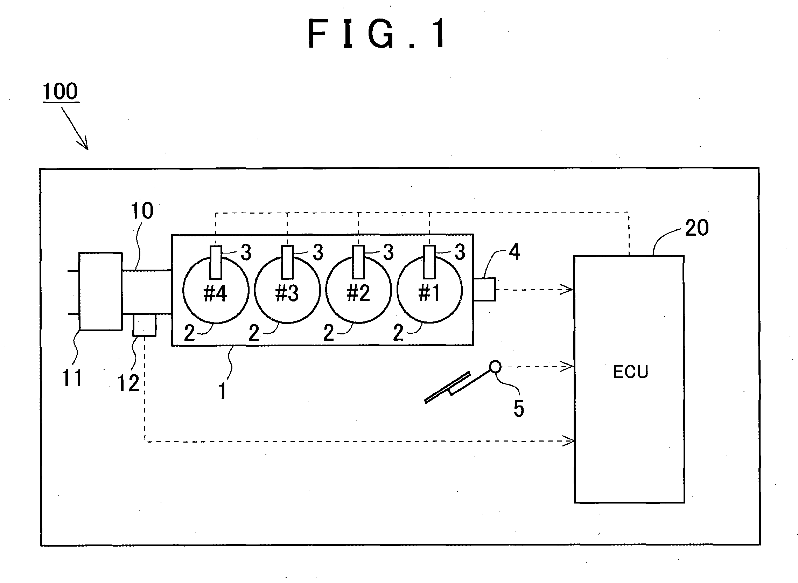

FIG. 1 is a schematic view showing a configuration of a misfire detection system for an internal combustion engine according to an embodiment. An internal combustion engine 1 installed in a vehicle 100 is a four cycle diesel engine having four cylinders 2. The misfire detection system for an internal combustion engine according to the invention is not limited to a diesel engine, and may also be applied to a gasoline engine or the like. Each cylinder 2 is provided with a fuel injection valve 3 that injects fuel directly into the cylinder 2. FIG. 1 shows an intake passage 10 of the internal combustion engine 1, a turbocharger 11 that performs turbocharging in the intake passage 10, and a pressure sensor 12 that detects a pressure of intake air turbocharged by the turbocharger 11.

An electronic control unit (ECU) 20 is provided in the internal combustion engine 1. The ECU 20 is a unit that controls an operating condition and so on of the internal combustion engine 1. The fuel injection valves 3 are electrically connected to the ECU 20. The ECU 20 controls a fuel injection timing and a fuel injection amount of each fuel injection valve 3. Various sensors, such as a crank angle sensor 4, an accelerator depression amount sensor 5, and the pressure sensor 12, are also electrically connected to the ECU 20. The crank angle sensor 4 is a sensor that detects a rotation angle position of a crankshaft of the internal combustion engine 1. The accelerator depression amount sensor 5 is a sensor that detects an accelerator depression amount of the vehicle 100. As described above, the pressure sensor 12 is a sensor that detects the intake air pressure in the intake passage 10 following turbocharging by the turbocharger 11.

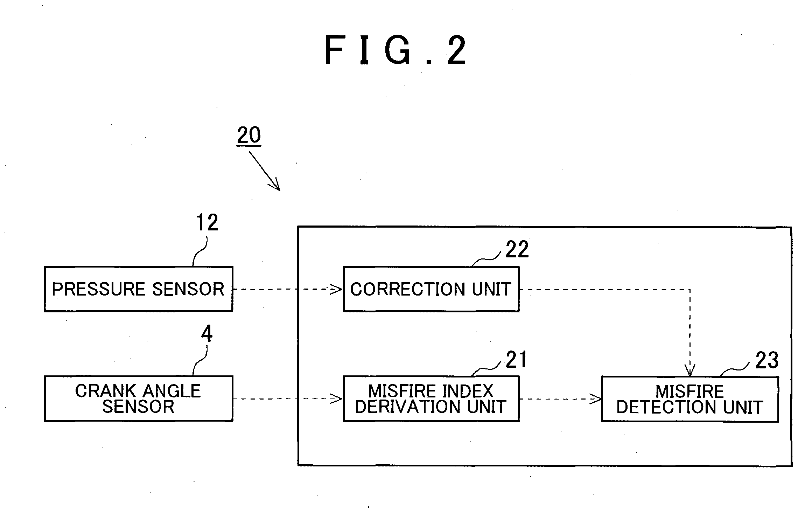

Various types of control are executed in the ECU 20 using output signals from various sensors including the sensors described above. FIG. 2 is a function block diagram showing a part of the functions of the ECU 20 realized by having the ECU 20 execute a control program. More specifically, the ECU 20 includes a misfire index derivation unit 21, a correction unit 22, and a misfire detection unit 23. The misfire index derivation unit 21 is a function unit that derives a "misfire index", which is derived using a rotation speed of the crankshaft of the internal combustion engine 1 as a reference so as to correspond to a predetermined order of engine speed of an output signal from the crank angle sensor 4. Derivation of the misfire index will be described in detail below. The misfire detection unit 23 is a function unit that detects a misfire condition occurring in the internal combustion engine 1 using the misfire index derived by the misfire index derivation unit 21. Here, the misfire condition expresses not only the existence of a misfire, which is detected by determining whether or not a misfire has occurred in the internal combustion engine 1, but also an extent of the misfire in the internal combustion engine. The extent of the misfire expresses a degree to which combustion of the fuel injected into the cylinder deviates from a desired combustion condition. The correction unit 22 is a function unit that uses the turbocharged intake air pressure (referred to hereafter simply as the "turbocharged pressure") detected by the pressure sensor 12 to perform a correction in relation to misfire detection by the misfire detection unit 23 using the misfire index.

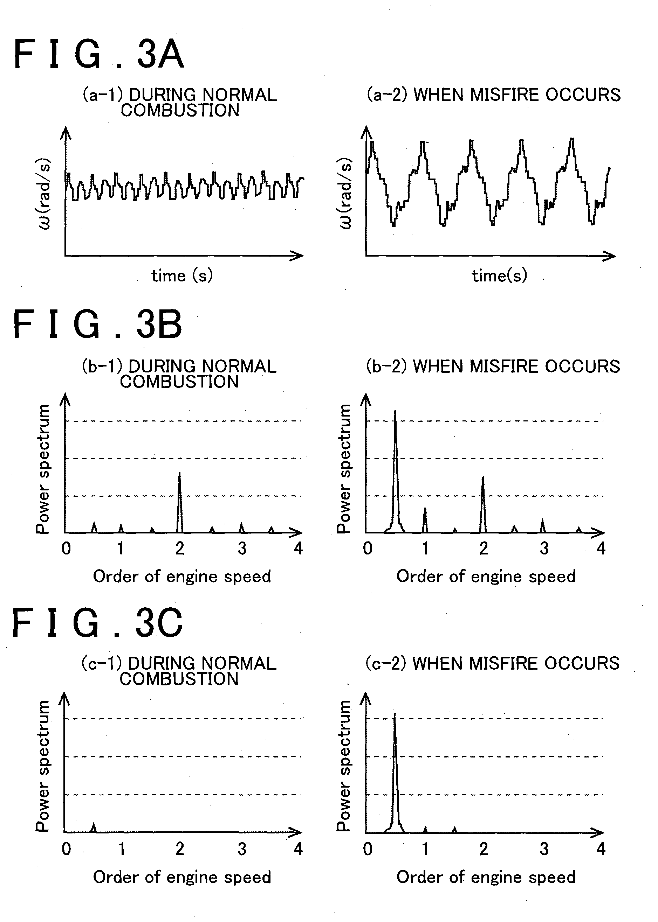

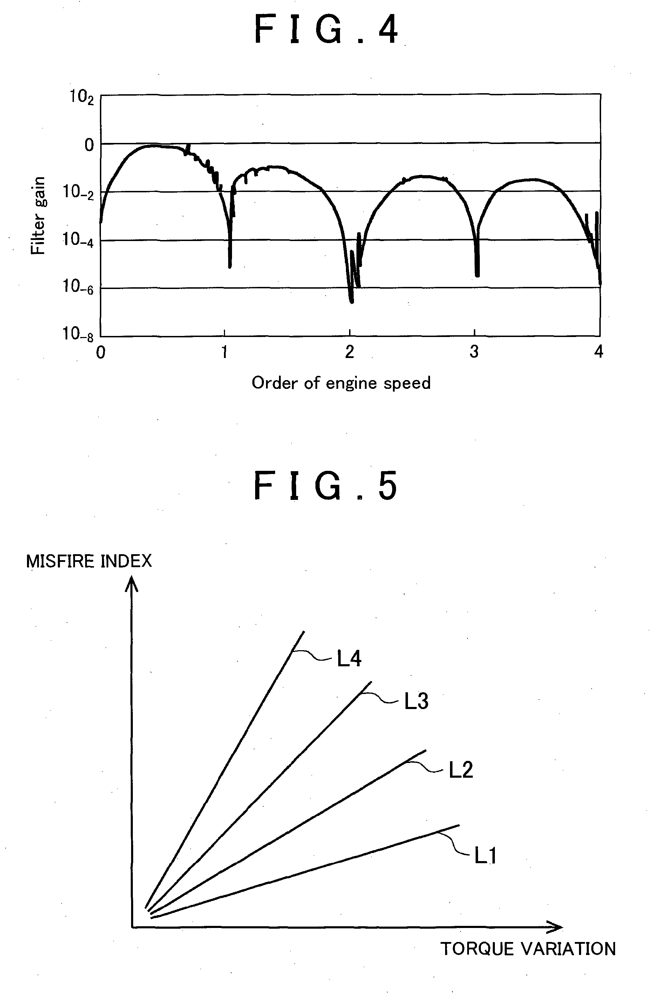

Derivation of the misfire index by the misfire index derivation unit 21 will be described on the basis of FIGS. 3A to C and 4. FIG. 3A is a graph showing a course of an angular velocity of the crankshaft of the internal combustion engine 1. In FIG. 3A, (a-1) shows the course during normal combustion, and (a-2) shows the course of the angular velocity when a misfire occurs. FIG. 3B is a graph obtained by subjecting a rotation angle signal from the crankshaft of the internal combustion engine 1, i.e. the output signal of the crank angle sensor 4, to frequency analysis and expressing a result on a power spectrum showing an order of engine speed, which uses the rotation speed of the crankshaft as a reference, on the abscissa. In FIG. 3B, (b-1) shows the power spectrum during normal combustion, and (b-2) shows the power spectrum when a misfire occurs. FIG. 3C is a graph expressing a result of filter processing, which is implemented in relation to rotation variation in the crankshaft of the internal combustion engine 1 in order to extract a 0.5 order of the engine speed, on a power spectrum showing the order of engine speed on the abscissa. In FIG. 3C, (c-1) shows a result obtained by implementing the filter processing on the rotation variation expressed in (b-1) of FIG. 3B, and (c-2) shows a result obtained by implementing the filter processing on the rotation variation expressed in (b-2) of FIG. 3B. Occurrence of a misfire indicates a case in which a misfire occurs continuously in one of the four cylinders 2 of the internal combustion engine 1.

FIG. 4 is a view showing a filter characteristic of a digital filter used in the filter processing for extracting the 0.5 order of the engine speed described above. In FIG. 4, the abscissa shows the order of engine speed, and the ordinate shows a filter gain. The filter characteristic of the digital filter shown in FIG. 4 is set such that the gain of integer orders of the engine speed including a second order of engine speed is low but the gain of the 0.5 order is high. The reason for this is that in the four-cylinder internal combustion engine 1, combustion is performed twice per rotation of the crankshaft. Therefore, as shown in (b-1) of FIG. 3B, the second order serves as a basis for rotation variation during normal combustion. On the other hand, when a misfire occurs in one of the four cylinders 2 of the internal combustion engine 1, one misfire occurs per two rotations of the crankshaft. Hence, as shown in (b-2) of FIG. 3B, rotation variation of the 0.5 order increases when a misfire occurs.

When performing a misfire determination, a digital filter having a filter characteristic such as that shown in FIG. 4 is used to implement filter processing to extract the 0.5 order of engine speed relating to the output signal of the crank angle sensor 4, which corresponds to a misfire, while damping the second order of engine speed, which is caused by combustion. In so doing, as shown in (c-1) and (c-2) of FIG. 3C, values of order of engine speed relating to rotation variation caused by phenomena other than a misfire, including the second order serving as the basis for rotation variation occurring during normal combustion, can be damped. A magnitude of the 0.5 order corresponding to a misfire, extracted from the output signal of the crank angle sensor 4 in this manner, corresponds to a misfire index of the invention.

The filter characteristic shown in FIG. 4 is an example of a filter characteristic with which to extract the 0.5 order of engine speed, and as long as the 0.5 order can be extracted, the filter processing according to this embodiment may be performed using a filter having a different filter characteristic to the filter characteristic shown in FIG. 4. A method described in Japanese Patent Application Publication No. 7-119536 (JP 7-119536 A) may be cited as an example of a method implemented to extract the 0.5 order from the output signal of the crank angle sensor 4.

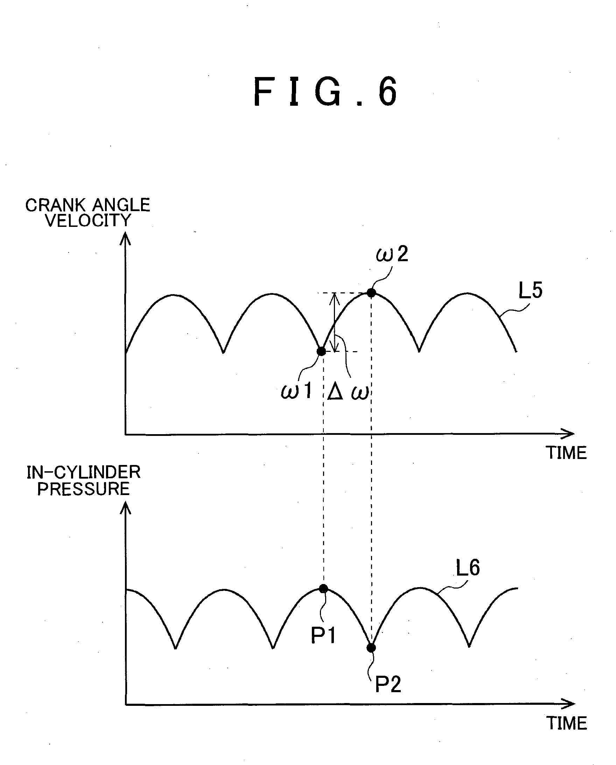

The misfire index will now be described in detail on the basis of FIGS. 5 and 6. As described above, the misfire index corresponds to the magnitude of the 0.5 order of engine speed based on the rotation speed of the crankshaft, which is obtained by subjecting the output signal of the crank angle sensor 4 to frequency analysis. In this embodiment, the misfire index may take the value of the 0.5 order itself on the power spectrum shown in FIG. 3C, or may take a value obtained after implementing processing having a predetermined purpose on the value of the 0.5 order of engine speed. As the value of the misfire index derived in this manner increases, a steadily larger number of signals caused by misfires are included in the output signal of the crank angle sensor 4. In other words, as the value of the misfire index increases, this means that the fuel in the internal combustion engine 1 has not reached a desired combustion condition derived from an engine load and an engine rotation speed. Therefore, a misfire condition is steadily approaching.

When a misfire occurs in the internal combustion engine 1, a phenomenon whereby the angular velocity of the crankshaft (referred to hereafter as a "crank angle velocity") deviates more greatly than during normal combustion occurs. Hence, this phenomenon is also reflected in the misfire index, and therefore a correlation according to which the misfire index increases as an amount of variation in the crank angle velocity increases can be found between the angular velocity and the misfire index.

Environmental conditions relating to combustion in the internal combustion engine 1 vary from moment to moment in response to environmental conditions such as the engine load and engine rotation speed required of the internal combustion engine 1, and environmental conditions such as an outside air temperature and an atmospheric pressure on the exterior of the internal combustion engine 1. The inventor has found that of these environmental conditions, a compression end pressure in the cylinder during combustion, or an environmental condition relating to the compression end pressure, in particular tends to affect the misfire index derived from the signal relating to the rotation angle position of the crankshaft. As shown in FIG. 5, for example, as the compression end pressure in the cylinder increases, a correlation between torque variation in the internal combustion engine 1 and the misfire index varies as shown by lines L1, L2, L3, L4. In other words, even when the torque variation in the internal combustion engine 1 remains constant, the value of the misfire index tends to increase as the compression end pressure increases.

FIG. 6 shows a comparison between a course L5 of the crank angle velocity of the crankshaft of the internal combustion engine 1 and a course L6 of an in-cylinder pressure. Both courses are shown along a common temporal axis. The compression end pressure is defined as the in-cylinder pressure when a piston disposed in the cylinder passes compression TDC. The compression end pressure is an element that determines a maximum value of a reaction force applied to rotation of the crankshaft. As a compression end pressure P1 increases, therefore, the reaction force acting on the piston at compression TDC increases, and as a result, a variation amount Δω in the crank angle velocity, which is defined as a difference between a crank angle velocity ω1 corresponding to the compression end pressure P1 and a crank angle velocity ω2 corresponding to an in-cylinder pressure P2 at bottom dead center of an expansion stroke, also increases. In consideration of the aforesaid correlation relating to the misfire index, according to which the misfire index increases as the amount of variation in the crank angle velocity increases, it is therefore evident that the compression end pressure is an element that affects the misfire index.

According to the related art, the correlation between the torque variation and the misfire index varies in accordance with the compression end pressure as shown in FIG. 5. Misfire detection using the misfire index is therefore more likely to be affected by the compression end pressure serving as a combustion-related environmental condition. As a result, it may become difficult to detect a misfire with a high degree of precision. In consideration of this point, the misfire detection system for the internal combustion engine 1 according to the invention employs a configuration in which the correction unit 22 performs a correction in relation to the misfire detection performed by the misfire detection unit 23 using the misfire index.

Next, the correction relating to the misfire detection, implemented by the correction unit 22, will be described. The correction implemented by the correction unit 22 is performed in consideration of the phenomenon whereby an increase in the effect of the compression end pressure on the misfire index, or in other words an increase in the compression end pressure, leads to an increase in the variation amount Δω in the crank angle velocity shown in FIG. 6 and a corresponding increase in the value of the misfire index. In a first example of the correction implemented by the correction unit 22, which corresponds to the claimed invention, the misfire index (referred to hereafter as an "uncorrected misfire index") derived by the misfire index derivation unit 21 is divided by the value of the compression end pressure in accordance with Equation 1 shown below. As a result, a post-correction misfire index (referred to hereafter as a "corrected misfire index") Nmf1 is calculated. By correcting the misfire index in this manner, a part of the value of the uncorrected misfire index that contributes to variation in the index caused by the compression end pressure can be reduced or canceled, and as a result, the misfire detection can be performed using a misfire index that is not affected, or less likely to be affected, by the compression end pressure. (corrected misfire index (Nmf1)) = (uncorrected misfire index) / (compression end pressure)

The compression end pressure may be estimated on the basis of an operating condition of the internal combustion engine. For example, the compression end pressure may be calculated as a function of the engine rotation speed and an engine output (the fuel injection amount) of the internal combustion engine 1. The compression end pressure in the cylinder relating to correction of the misfire index is a pressure at which an air-fuel mixture, which is generated during the intake stroke by the intake air flowing into the cylinder 2 and the fuel injected from the fuel injection valve 3, is formed in the cylinder 2 by a compression action of the piston. Therefore, a predetermined correlation exists between the compression end pressure and the engine rotation speed and engine output (fuel injection amount), which determine an amount of the air-fuel mixture. Hence, the compression end pressure can be calculated using these parameters. For example, a correlation between the compression end pressure and the engine rotation speed and engine output (fuel injection amount) that can be measured in advance by experiment may be learned and stored in a memory of the ECU 20 in the form of a control map.

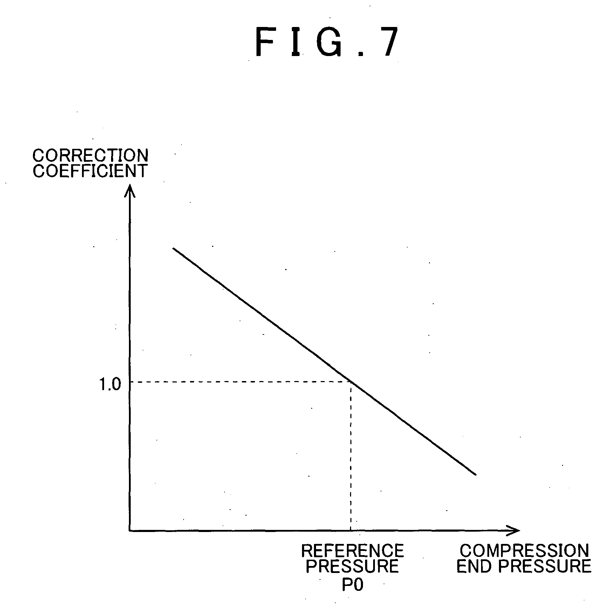

Next, a second example of the correction implemented by the correction unit 22, which does not correspond to the claimed invention, will be described. In the second example, the corrected misfire index Nmf1 is calculated by multiplying a correction coefficient Ch associated with the value of the compression end pressure by the uncorrected misfire index derived by the misfire index derivation unit 21 in accordance with Equation 2, shown below. At this time, as shown in FIG. 7, the correction coefficient Ch is set to decrease in value as the compression end pressure increases. More specifically, a compression end pressure appearing in the cylinders 2 of the internal combustion engine 1 is set as a reference pressure P0, and the correction coefficient at that time is set at 1.0. The correction coefficient Ch may then be set such that a misfire index corresponding to the reference pressure P0 serves as a reference, and when the compression end pressure deviates from the reference pressure P0, the contribution of the compression end pressure to index variation is canceled. (corrected misfire index (Nmf1)) = (uncorrected misfire index) × (correction coefficient Ch)

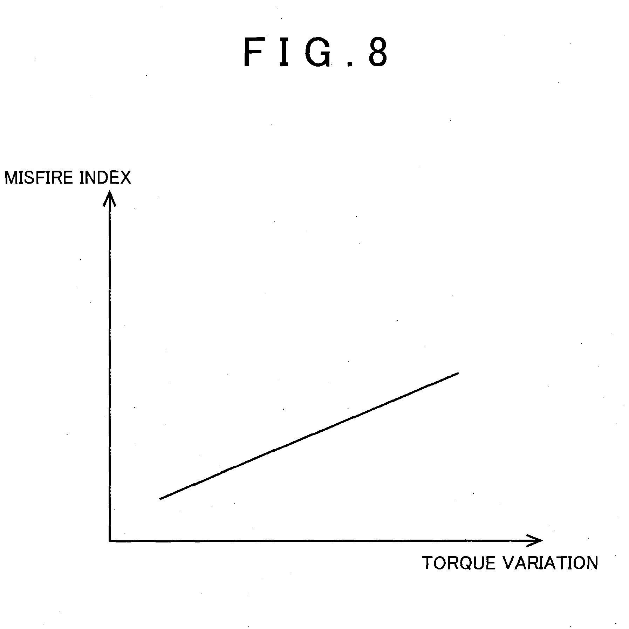

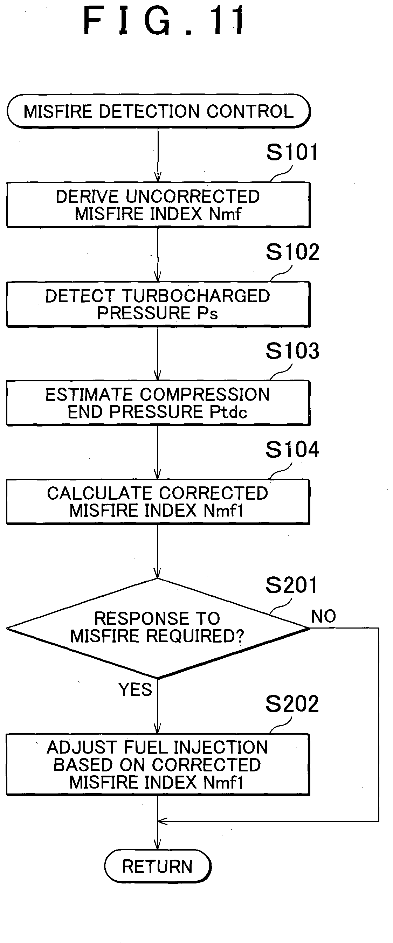

By canceling the contribution of the compression end pressure to index variation in this manner, the correlation between the torque variation and the misfire index can be a predetermined correlation regardless of the magnitude of the compression end pressure, as shown in FIG. 8. By forming the correlation between the torque variation and the misfire index as a relationship that is not affected by the compression end pressure in this manner, misfire detection can be performed with a high degree of precision, in contrast to the case shown in FIG. 5. As regards the corrected misfire index, the correction coefficient may be adjusted such that the correlation between the torque variation and the misfire index forms a linear relationship, as shown in FIG. 8. By performing the correction in this manner, control using the misfire index, for example fuel injection adjustment during misfire detection control shown in FIG. 11, to be described below, and so on can be performed easily.

When setting the correction coefficient Ch, following parameters may also be taken into consideration. (i) In consideration of the fact that a predetermined correlation exists between the compression end pressure and the engine rotation speed and engine output (fuel injection amount) determining the air-fuel ratio amount, as described above, the correction coefficient Ch may be set as a function of the engine rotation speed and engine output (fuel injection amount) of the internal combustion engine 1. In so doing, the correction coefficient Ch can be derived while taking into consideration the correlation between the compression end pressure and the engine rotation speed and engine output (fuel injection amount), which can be measured in advance by experiment.

(ii) A lubricating oil temperature or a cooling water temperature of the internal combustion engine 1 may also be used to set the correction coefficient Ch. As described above, the misfire index correlates with the amount of variation in the angular velocity of the crankshaft, but in addition to the aforesaid compression end pressure, africtional force acting on the piston in the cylinder 2 may be cited as another environmental condition to be taken into consideration. The reason for this is that when the frictional force varies, the amount of variation in the angular velocity of the crankshaft may also vary, even if the compression end pressure remains constant. The frictional force typically increases as the lubricating oil temperature decreases, and as a result, the amount of variation in the angular velocity of the crankshaft may also increase, leading to an increase in the effect on the misfire index. Hence, the correction coefficient Ch set on the basis of the compression end pressure may be adjusted so as to decrease as the lubricating oil temperature or the cooling water temperature decreases.

(iii) A rotating mass (an inertia) based on the crankshaft of the internal combustion engine 1 may also be used to set the correction coefficient Ch. As described above, the misfire index correlates with the amount of variation in the angular velocity of the crankshaft, but in addition to the aforesaid compression end pressure, the rotating mass may be cited as another environmental condition to be taken into consideration. The reason for this is that when the rotating mass varies, the amount of variation in the angular velocity of the crankshaft may also vary, even if the compression end pressure remains constant. An inertial force typically increases as the rotating mass increases, and as a result, the amount of variation in the angular velocity of the crankshaft may decrease, leading to a reduction in the effect on the misfire index. Hence, the correction coefficient Ch set on the basis of the compression end pressure may be adjusted so as to increase as the rotating mass increases.

Next, a third example of the correction implemented by the correction unit 22, which corresponds to the claimed invention, will be described. The corrections relating to misfire detection described above are examples of correction using the compression end pressure, but instead of correcting the misfire index using the compression end pressure directly, the misfire index may be corrected using another pressure value, for example a turbocharged pressure P10 described below, as a parameter relating to the compression end pressure.

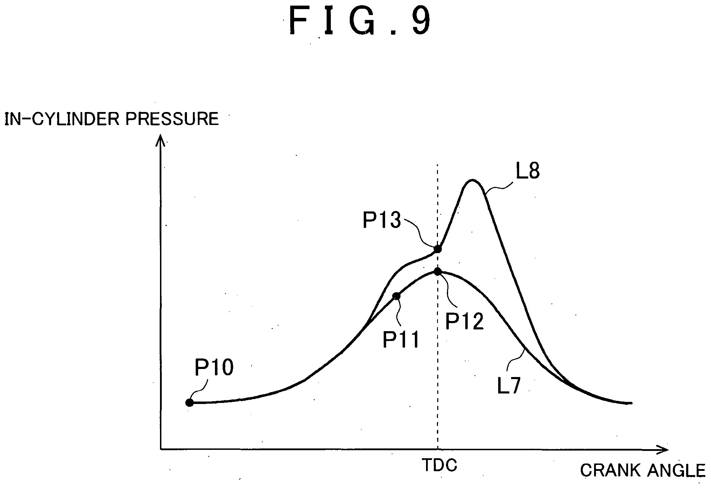

Here, a line L8 in FIG. 9 shows a course of the pressure in the cylinder 2. Note that a pressure indicated by a point P10 before compression TDC (as indicated in the drawing) is a pressure generated at a point where the intake stroke occurs in the cylinder 2 such that the turbocharged intake air flows into the cylinder, and this pressure may be considered identical to the turbocharged pressure detected by the pressure sensor 12. In the cylinder 2, fuel is injected from the fuel injection valve 3 in the vicinity of compression TDC, whereby the pressure in the cylinder 2 reaches a compression end pressure P13 and then rises to a peak pressure as the fuel is burned. Hence, assuming that the compression stroke in the cylinder 2 is an adiabatic process or a polytropic process, a correlation can be found between the turbocharged pressure P10 and the compression end pressure P13 by taking into consideration a flow in which the intake air flowing into the cylinder 2 under the turbocharged pressure P10 is compressed and the fuel injected before compression TDC is burned. In consideration of this correlation, therefore, the misfire index may be corrected using the turbocharged pressure P10.

Furthermore, when fuel injection is performed in the cylinder 2 before compression TDC, the injected fuel is consumed during combustion such that the in-cylinder pressure increases correspondingly even at compression TDC. However, the contribution made by combustion of the fuel injected before compression TDC to the increase in the in-cylinder pressure may be rather small in comparison with the increase in the in-cylinder pressure generated by piston compression itself. In this case, the correlation between the turbocharged pressure P10 and the compression end pressure P13 can be set with a comparatively high degree of precision even when combustion of the fuel injected before compression TDC is ignored. In FIG. 9, the course of the pressure in the cylinder 2 when combustion of the injected fuel is ignored in this manner is indicated by a line L7, and the compression end pressure at this time is indicated by a point P12. When an internal volume of the cylinder 2 at intake bottom dead center is set as Vbdc and the internal volume of the cylinder 2 at compression TDC is set as Vtdc, the compression end pressure P12 can be derived from the turbocharged pressure P10 in accordance with Equation 3, shown below. (compression end pressure (pressure P12)) = (turbocharged pressure (pressure P10)) × (Vbdc / Vtdc)n

Here, n is a polytropic index, assuming that the compression stroke of the cylinder 2 is a polytropic process, which is defined as a function of the cooling water temperature, an intake air temperature, the turbocharged pressure, the engine rotation speed, the fuel injection amount, an EGR rate, and so on of the internal combustion engine 1.

(Vbdc / Vtdc)ⁿ in Equation 3 corresponds to the aforesaid correlation between the turbocharged pressure P10 and the compression end pressure P13, and by using this correlation, the misfire index can be corrected on the basis of the turbocharged pressure P10. When another pressure (a pressure P11 on the line L7 in FIG. 9, for example) found to have a predetermined correlation with the compression end pressure P12 exists, similarly to the turbocharged pressure P10, the misfire index may be corrected on the basis of this pressure P11.

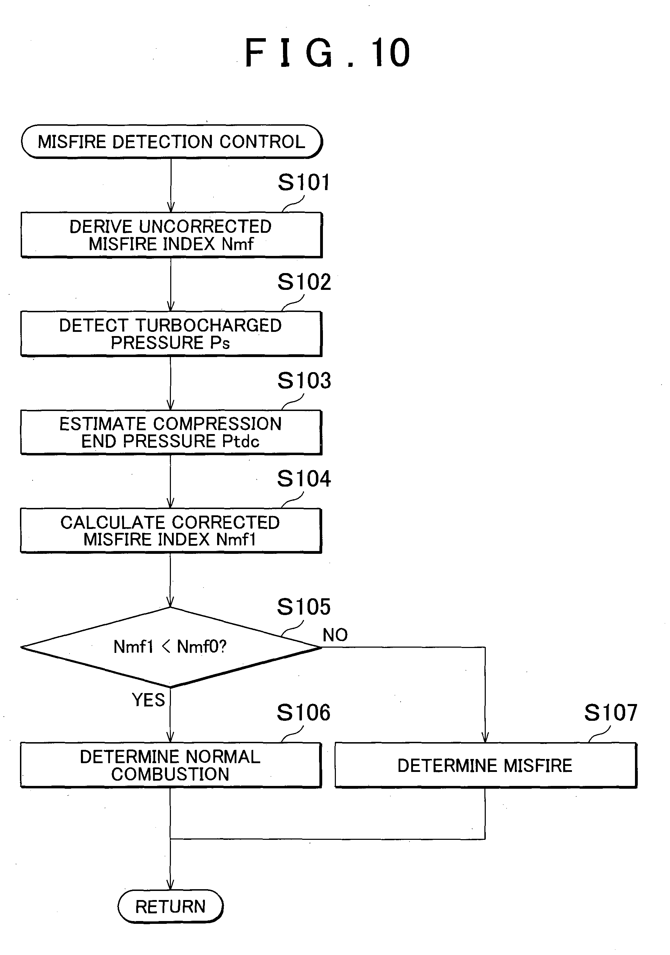

Misfire detection control in the internal combustion engine 1, including the correction applied to misfire detection as described above, will now be described on the basis of FIG. 10. The misfire detection control shown in FIG. 10 is performed by executing a control program stored in the ECU 20. The misfire detection control may be performed continuously by the ECU 20, or performed only when a predetermined condition, such as concern that a misfire has occurred in the internal combustion engine 1, is established. First, in S101, the misfire index derivation unit 21 extracts the 0.5 order of engine speed from the output signal of the crank angle sensor 4 in order to derive an uncorrected misfire index Nmf, as described above. As shown in FIG. 5, the uncorrected misfire index Nmf is affected by the compression end pressure in the cylinder 2. When the processing of S101 is complete, the control advances to S102.

In S102, a turbocharged pressure Ps in the intake passage 10 is detected by the pressure sensor 12. Next, in S103, a compression end pressure Ptdc (a compression end pressure ignoring combustion of the injected fuel) in the cylinder 2 is estimated from the turbocharged pressure Ps in accordance with Equation 3 shown above. When the processing of S103 is complete, the control advances to S104.

Next, in S104, the uncorrected misfire index Nmf is corrected by the correction unit 22, whereby the corrected misfire index Nmf1 is calculated. Any of the correction examples described above may be used in the correction performed by the correction unit 22, but in this embodiment, it is assumed that a correction using the correction coefficient Ch shown in the second correction example, or in other words a correction performed in accordance with Equation 2, is performed. More specifically, as shown in FIG. 7, a control map on which a correlation between the compression end pressure Ptdc and the correction coefficient Ch is set such that the correction coefficient Ch decreases, or in other words a correction amount applied to the uncorrected misfire index Nmf increases, as the compression end pressure Ptdc increases is stored in the ECU 20. By accessing this control map in accordance with the compression end pressure Ptdc estimated in S103, the corresponding correction coefficient Ch is calculated, whereupon the corrected misfire index Nmf1 is calculated in accordance with Equation 2. When the processing of S104 is complete, the control advances to S105.

In S105, a determination is made as to whether or not the corrected misfire index Nmf1 calculated in S104 is lower than a predetermined threshold Nmf0 relating to the misfire index. The predetermined threshold Nmf0 is a reference value for determining whether or not a misfire has occurred in the internal combustion engine 1, and when the misfire index equals or exceeds the predetermined threshold Nmf0, this means that a misfire has occurred. Hence, when an affirmative determination is made in S105, combustion is determined to be normal in S106, and when a negative determination is made in S105, a misfire is determined to have occurred in S107.

In this control, as described above, misfire detection is performed in accordance with the corrected misfire index Nmf1 corrected on the basis of the compression end pressure in the cylinder 2, and therefore misfire detection which is not affected by the compression end pressure, or in which the effect of the compression end pressure is alleviated, can be realized, enabling an improvement in the detection precision.

Next, modified examples of this embodiment will be described.

### [Modified Example 1]

In the misfire detection control shown in FIG. 10, the corrected misfire index Nmf1 is calculated in S104 after estimating the compression end pressure Ptdc in S103, but instead of this configuration, the corrected misfire index Nmf1 may be calculated on the basis of the turbocharged pressure Ps detected in S102. In this case, as described above, the corrected misfire index Nmf1 is calculated in consideration of the correlation between the turbocharged pressure Ps and the compression end pressure Ptdc shown in Equation 3. More specifically, the correction coefficient Ch used to calculate the corrected misfire index Nmf1. The correlation between the correction coefficient Ch and the turbocharged pressure Ps is set on a control map such that the correction coefficient Ch decreases as a resulting converted value increases when the turbocharged pressure Ps is converted into the compression end pressure in consideration of the correlation. In other words, The correlation between the correction coefficient Ch and the turbocharged pressure Ps is set on a control map such that a correction amount applied to the uncorrected misfire index Nmf increases.

### [Modified Example 2]

Further, in the misfire detection control shown in FIG. 10, the corrected misfire index Nmf1 is calculated in S104 on the basis of the compression end pressure Ptdc, but instead of this configuration, the predetermined threshold Nmf0 may be corrected on the basis of the compression end pressure Ptdc, and the misfire determination may be performed by comparing the corrected predetermined threshold Nmf0 with the uncorrected misfire index Nmf. In this case, the predetermined threshold Nmf0 is corrected such that a correction amount (an increase amount) applied to the predetermined threshold Nmf0 increases as the compression end pressure Ptdc increases. As a result, similarly to the misfire detection control shown in FIG. 10, highly precise misfire detection that is unlikely to be affected by the compression end pressure can be realized.

A second embodiment of the misfire detection control executed in the misfire detection system for an internal combustion engine according to the invention will be described on the basis of FIG. 11. Similarly to the misfire detection control shown in FIG. 10, the misfire detection control shown in FIG. 11 is performed by executing a control program stored in the ECU 20. Further, of the processing included in the misfire detection control according to this embodiment, identical processing to the processing included in the misfire detection control shown in FIG. 10 has been allocated identical reference symbols, and detailed description thereof has been omitted. In the misfire detection control according to this embodiment, when the processing of S104 is complete, the control advances to S201.

In S201, a determination is made on the basis of the corrected misfire index Nmf1 calculated in S104 as to whether or not it is necessary to respond to a misfire in the internal combustion engine 1, or in other words whether or not it is necessary to take measures to eliminate a combustion defect occurring in the internal combustion engine. More specifically, similarly to the processing of S105 in FIG. 10, when the corrected misfire index is larger than the predetermined threshold Nmf0 or a threshold provided from another viewpoint, it is determined that combustion in the internal combustion engine 1 is not in a favorable condition. When an affirmative determination is made in S201, the control advances to S202, and when a negative determination is made, the control is terminated.

In S202, control parameters relating to fuel injection in the internal combustion engine 1, for example the injection timing and the fuel injection amount, are corrected on the basis of the corrected misfire index Nmf1. As described above, the corrected misfire index Nmf1 is an index from which the effect of the compression end pressure in the cylinder on the misfire index has been removed as far as possible, and therefore the value of the corrected misfire index Nmf1 is useful as a numerical value that precisely reflects the combustion condition in the cylinder 2. On the basis of this numerical value, therefore, the control parameters relating to fuel injection are adjusted such that a favorable combustion condition is realized in the cylinder 2, or in other words such that the value of the misfire index decreases. For example, when a pilot injection is performed in the internal combustion engine 1, which is constituted by a diesel engine, at an earlier timing than a main injection performed in the vicinity of compression TDC, a misfire condition in the internal combustion engine 1 can be alleviated by moving the injection timing of the pilot injection further toward the compression TDC side as the corrected misfire index Nmf1 increases. A fuel injection amount ratio between the pilot injection and the main injection is also preferably adjusted appropriately such that the misfire index decreases.

Note that with regard to the corrected misfire index Nmf1, as shown in FIG. 8, the correction coefficient may be set such that a correlation between the torque variation and the corrected misfire index Nmf1 forms a linear relationship. In this case, variation in the value of the corrected misfire index Nmf1 is clearly associated with variation in an amount of torque variation in the internal combustion engine 1, and therefore the fuel injection timing of the pilot injection and the fuel injection amount ratio between the pilot injection and the main injection can be adjusted easily.

## Claims

1. A misfire detection system for an internal combustion engine (1), the misfire detection system comprising:
a crank angle sensor (4) configured to detect a rotation angle position of a crankshaft of the internal combustion engine (1);
a misfire detection unit (23) configured to detect a misfire condition in the internal combustion engine (1) based on a misfire index, the misfire index being derived from a rotation speed of the crankshaft as a reference corresponded to a predetermined order of engine speed of an output signal from the crank angle sensor (4), and having a correlation with an amount of variation in an angular velocity of the crankshaft such that a value of the misfire index varies in accordance with the amount of variation in the angular velocity of the crankshaft;
an acquisition unit configured to obtain a parameter relating to a compression end pressure (Ptdc) in a cylinder (2) of the internal combustion engine (1); and
a correction unit (22) configured to correct the misfire index, or a predetermined misfire detection parameter used together with the misfire index during misfire detection by the misfire detection unit (23), based on the parameter obtained by the acquisition unit , the misfire detection system being **characterized in that**,
the predetermined misfire detection parameter is a predetermined threshold relating to the misfire index, which is used by the misfire detection unit (23) to determine whether or not a misfire has occurred,
the misfire detection unit (23) is configured to detect the misfire when the misfire index is larger than the predetermined threshold, and
the correction unit (22) is configured to correct the misfire index such that when the value of the parameter obtained by the acquisition unit is converted into the compression end pressure (Ptdc) in the cylinder (2), a correction amount applied to the misfire index or the predetermined threshold increases as a resulting converted value increases.

2. The misfire detection system according to claim 1, wherein
the internal combustion engine (1) includes a turbocharger (11), and
the parameter is a turbocharged pressure generated by the turbocharger (11).

3. The misfire detection system according to any one of claims 1 or 2, wherein
the internal combustion engine (1) includes a turbocharger (11), and
the parameter is the compression end pressure (Ptdc) in the cylinder (2), which is estimated on the basis of a turbocharged pressure generated by the turbocharger (11).

4. The misfire detection system according to claim 2 or 3, wherein the parameter is the compression end pressure (Ptdc) estimated on the basis of the turbocharged pressure under an assumption that no fuel is burned in the cylinder (2) at compression top dead center.

## Patentansprüche

1. System zum Erkennen von Fehlzündungen für einen Verbrennungsmotor (1), wobei das System zum Erkennen von Fehlzündungen Folgendes umfasst:
einen Kurbelwinkelsensor (4), der dafür konfiguriert ist, eine Drehwinkelposition einer Kurbelwelle des Verbrennungsmotors (1) zu erkennen,
eine Einheit (23) zum Erkennen von Fehlzündungen, die dafür konfiguriert ist, basierend auf einem Fehlzündungsindex einen Fehlzündungszustand in dem Verbrennungsmotor (1) zu erkennen, wobei der Fehlzündungsindex von einer Drehzahl der Kurbelwelle als eine Referenz derart abgeleitet wird, dass er einer festgelegten Größenordnung der Motordrehzahl eines Ausgangssignals von dem Kurbelwinkelsensor (4) entspricht, und der eine Korrelation zu einem Umfang der Änderung in einer Winkelgeschwindigkeit der Kurbelwelle derart aufweist, dass sich ein Wert des Fehlzündungsindex gemäß dem Umfang der Änderung in der Winkelgeschwindigkeit der Kurbelwelle verändert,
eine Erfassungseinheit, die dafür konfiguriert ist, einen Parameter bezüglich eines Verdichtungsenddrucks (Ptdc) in einem Zylinder (2) des Verbrennungsmotors (1) zu gewinnen, und
eine Korrektureinheit (22), die dafür konfiguriert ist, den Fehlzündungsindex oder einen festgelegten Erkennungsparameter zum Erkennen von Fehlzündungen, der während des Erkennens einer Fehlzündung durch die Einheit (23) zum Erkennen von Fehlzündungen zusammen mit dem Fehlzündungsindex verwendet wird, basierend auf dem Parameter, der durch die Erfassungseinheit erzielt wird, zu korrigieren,
wobei das System zum Erkennen von Fehlzündungen **dadurch gekennzeichnet ist, dass**
der festgelegte Parameter zum Erkennen von Fehlzündungen ein festgelegter Schwellwert bezüglich des Fehlzündungsindex ist, der durch die Einheit (23) zum Erkennen von Fehlzündungen verwendet wird, um zu bestimmen, ob eine Fehlzündung aufgetreten ist oder nicht,
wobei die Einheit (23) zum Erkennen von Fehlzündungen dafür konfiguriert ist, die Fehlzündung zu erkennen, wenn der Fehlzündungsindex größer als der festgelegte Schwellwert ist, und
die Korrektureinheit (22) dafür konfiguriert ist, den Fehlzündungsindex derart zu korrigieren, dass, wenn der Wert des durch die Erfassungseinheit gewonnenen Parameters in den Verdichtungsenddruck (Ptdc) in dem Zylinder (2) umgewandelt wird, ein Umfang der Korrektur, der auf den Fehlzündungsindex oder den festgelegten Schwellwert anzuwenden ist, größer wird, wenn ein resultierender umgewandelter Wert größer wird.

2. System zum Erkennen von Fehlzündungen nach Anspruch 1, wobei
der Verbrennungsmotor (1) einen Turbolader (11) beinhaltet und
der Parameter ein Ladedruck ist, der durch den Turbolader (11) erzeugt wird.

3. System zum Erkennen von Fehlzündungen nach einem der Ansprüche 1 und 2, wobei
der Verbrennungsmotor (1) einen Turbolader (11) beinhaltet und
der Parameter der Verdichtungsenddruck (Ptdc) in dem Zylinder (2) ist, der auf der Basis eines vom Turbolader (11) erzeugten Ladedrucks geschätzt wird.

4. System zum Erkennen von Fehlzündungen nach Anspruch 2 oder 3, wobei der Parameter der Verdichtungsenddruck (Ptdc) ist, der auf der Basis des Ladedrucks unter einer Annahme geschätzt wird, dass am oberen Totpunkt der Verdichtung in dem Zylinder (2) kein Kraftstoff verbrannt wird.

## Revendications

1. Système de détection de raté d'allumage pour un moteur à combustion interne (1), le système de détection de raté d'allumage comprenant :
un capteur d'angle de vilebrequin (4) configuré pour détecter une position d'angle de rotation d'un vilebrequin du moteur à combustion interne (1) ;
une unité de détection de raté d'allumage (23) configurée pour détecter une condition de raté d'allumage dans le moteur à combustion interne (1) sur la base d'un index de raté d'allumage, l'index de raté d'allumage étant dérivé d'une vitesse de rotation du vilebrequin comme référence en correspondance avec un ordre prédéterminé de vitesse de moteur d'un signal de sortie du capteur d'angle de vilebrequin (4), et ayant une corrélation avec une quantité de variation d'une vitesse angulaire du vilebrequin de telle sorte qu'une valeur de l'index de raté d'allumage varie en fonction de la quantité de variation de la vitesse angulaire du vilebrequin ;
une unité d'acquisition configurée pour obtenir un paramètre se rapportant à une pression de fin de compression (Ptdc) dans un cylindre (2) du moteur à combustion interne (1) ; et
une unité de correction (22) configurée pour corriger l'index de raté d'allumage, ou un paramètre prédéterminé de détection de raté d'allumage utilisé conjointement avec l'index de raté d'allumage pendant la détection de raté d'allumage par l'unité de détection de raté d'allumage (23), sur la base du paramètre obtenu par l'unité d'acquisition, le système de détection de raté d'allumage étant **caractérisé en ce que**,
le paramètre prédéterminé de détection de raté d'allumage est un seuil prédéterminé se rapportant à l'index de raté d'allumage, qui est utilisé par l'unité de détection de raté d'allumage (23) pour déterminer si un raté d'allumage s'est produit ou non,
l'unité de détection de raté d'allumage (23) est configurée pour détecter le raté d'allumage quand l'index de raté d'allumage est plus grand que le seuil prédéterminé, et
l'unité de correction (22) est configurée pour corriger l'index de raté d'allumage de telle sorte que, quand la valeur du paramètre obtenu par l'unité d'acquisition est convertie en pression de fin de compression (Ptdc) dans le cylindre (2), une quantité de correction appliquée à l'index de raté d'allumage ou au seuil prédéterminé augmente lorsqu'une valeur convertie augmente.

2. Système de détection de raté d'allumage selon la revendication 1, dans lequel
le moteur à combustion interne (1) comprend un turbocompresseur (11), et
le paramètre est une pression de suralimentation générée par le turbocompresseur (11).

3. Système de détection de raté d'allumage selon l'une quelconque des revendications 1 ou 2, dans lequel
le moteur à combustion interne (1) comprend un turbocompresseur (11), et
le paramètre est la pression de fin de compression (Ptdc) dans le cylindre (2), qui est estimée sur la base d'une pression de suralimentation générée par le turbocompresseur (11).

4. Système de détection de raté d'allumage selon la revendication 2 ou 3, dans lequel le paramètre est la pression de fin de compression (Ptdc) estimée sur la base de la pression de suralimentation en supposant qu'aucun carburant n'est brûlé dans le cylindre (2) au point mort haut de compression.
